# EUROPEAN PATENT APPLICATION

(11) **EP 1 460 807 A1**
(43) Date of publication of application: **22.09.2004**
(21) Application number: 03006496.8
(22) Date of filing: 21.03.2003
(51) Int. Cl.: H04L 12/56

(54) **System method and apparatus for routing traffic in a telecommunications network**

(71) Applicant: SIEMENS AKTIENGESELLSCHAFT, 80333 München (DE)
(72) Inventor: Geilfus, Dirk, 81476 München (DE); Schwank, Klaus-Peter, 82152 Martinsried (DE); Vierthaler, Richard, 80687 München (DE)

(57) **Abstract**

Routing telecommunications traffic is provided. A network (302) sends/receives the telecommunications traffic (308). A sub-network (304) for receives/sends the telecommunications traffic (308) from/to the network (302). Routing devices (310a,b) route the telecommunications traffic (308) in the sub-network (304) according to a redundancy protocol. A criteria (316) relates a condition of the network to the redundancy protocol, thereby causing the routing devices (310a,b) to route the telecommunications traffic (308) according to the condition in the network (302).

## Description

The present invention relates to routing traffic in a telecommunications network and, more particularly, to triggering the switching of traffic in a telecommunications network.

In a telecommunications network, data is transferred from one device to the next. This is typically accomplished using routing, wherein routing devices situated at network points determine the next network point to which data, normally packets, should be forwarded toward its destination. A packet may travel through a number of network points with routers before ultimately arriving at its destination. In telecommunications, a router is often included as part of a network switch.

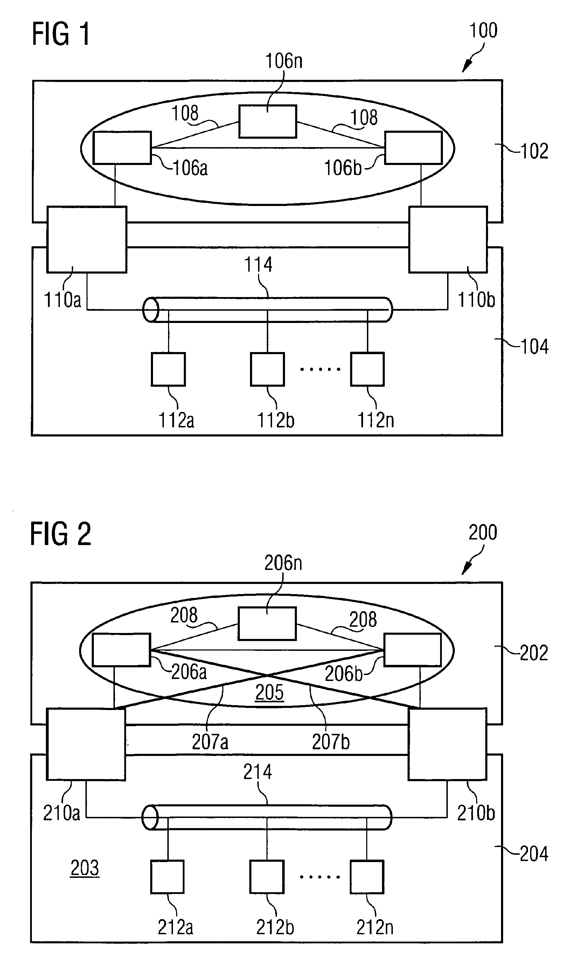

With respect to the example Network 100 of Figure 1, a number of problems arise. In the figure, there is generally shown a network 102, which may be an Internet Network, that is coupled to a Sub-Network 104. A Core Router 106n forwards the data 108 to Edge Routers 110a, b, which sits at the boundary between the networks 102, 104. The core router 106n may be part of an IP Backbone, which includes a network of Core Routers 106a, b. To continue, the Edge Routers 110a, b forward the data to a particular Host (112a...112n). The data is switched on the Sub-Network side 104 according to a switching protocol, such as the Virtual Router Redundancy Protocol (VRRP), to direct the data to the corresponding Host 112a..n. The Sub-Network may be an Ethernet Network 114.

According to VRRP, the Sub-Network 104 of the Hosts 112a..n are redundantly connected to a second Edge Router, or Back Up Edge Router, 110b. VRRP orchestrates the manner in which one or more such Backup Routers are switched when using a statically configured router on a local network, such as Local Area Network (LAN). Using VRRP, a virtual MAC address is shared among the routers, technically Layer-3-Switches, with one designated as the master router and the others as backups. In case the master fails, the virtual MAC address is mapped to a backup router's IP address. From the End User, the network appears as a single Router. A more detailed understanding of VRRP can be obtained from Internet Protocol Versions 4 and 6 provided by the Internet Engineering Task Force (IETF).

Figure 1 shows the redundant connection of the Hosts over the VRRP without redundant connection to the IP-backbone (Core Router) in case of an interruption of the interface. The VRRP Process coordinates, however, only the Access Area (ie, Hosts, Gateways, Ethernet-Equipment) over, for example Fast Ethernet or Gigabit Ethernet Interfaces, to the redundant Routers. Therefore, the VRRP enabled router is not aware of the interruption of the connection, or link, to the IP-backbone, ie Core Router, and arranges no bypass of the Ethernet-frames of the backup router. As a result, the connection data is lost.

The telecommunications network 200 of Figure 2 illustrates the problem from the side of the network 202. In this case, the concept of redundancy has been extended to the connection between the Access Area 203 of the sub-network 204 and the IP Backbone 205 of the network 202. In any event, Core Routers 206a-n redundantly connect 207a,b the traffic 208 to the Edge Routers 210a,b, as well as the Layer-3-Switches, over the IP-Backbone 205. In other words, in the case of an interruption, such a connection between the Access Area and the IP backbone 205 would, with assistance of standardized routings protocol (for example, Open Shortest Path First, OSPF), be switched to the second redundant connection 210b to route the traffic to one of the particular Hosts 212a-n. As in the Problematically, an interruption of such a connection in the Core Router network 202 has no influence on the VRRP switching process within the Sub-Network 204. In addition, such a redundant core router connection can only be achieved through increased hardware complexity. Additional costs would be necessary to enhance the router(s) and the IP-network, especially when it is desired to establish a 'carrier grade' connection to the IP-backbone.

There has been no adequate solution, until now, of the aforementioned problems.

It is an object of the present invention to provide traffic control.

It is an object of the present invention to provide redundancy between the core router and the sub-network.

It is an object of the present invention to provide criteria for switching traffic.

It is an object of the present invention to provide criteria that trigger a switching protocol in the Sub-Network.

It is an object of the present invention to provide criteria on the core router side to trigger the switching in the sub-network.

The solution of the problem is achieved by providing criteria, or policies, defined for the connection between the Access Area and IP-Back bone that trigger the switching process in the sub-network. The policy-function influences the VRRP-Process and can therewith guarantee the redundancy from the Access Area to the IP-Backbone. With this technical leap forward, the assignable criteria (policies) trigger the VRRP-Process. Through which, a redundant IP-connection over the Ethernet from the Access Area to the IP-backbone (core router) is guaranteed.

Specifically, a method for routing telecommunications traffic between a network and a sub-network is provided, in which routing devices of the sub-network route the traffic in the sub-network according to a redundancy protocol. Criteria is set that relates a condition of the network to the redundancy protocol of the sub-network. The switching of the routing devices of the sub-network is triggered on the basis of the criteria.

The present invention further provides a system for routing telecommunications traffic. A network sends/receives the telecommunications traffic. A sub-network for receiving/sending the telecommunications traffic from/to the network. Routing devices route the telecommunications traffic in the sub-network according to a redundancy protocol. A criteria relates a condition of the network to the redundancy protocol, thereby causing the routing devices to route the telecommunications traffic according to the condition in the network.

It shall be appreciated that the present invention is cost effective for Network Carriers. The redundant connection connects the Networkcarrier by carrier grade IP connection of that Network to the IP-Backbone without requiring costly enhancements to the core router or the IP-Backbone. The invention provides the Solution Provider with a competitive advantage, as well, because it provides lower cost solutions.

By way of example, the invention shall now be described with reference to the several figures.
Fig. 1 illustrates a schematic diagram;
Fig. 2 illustrates a schematic diagram;
Fig. 3 illustrates the present invention;
Fig. 4 illustrates a flow diagram of the present invention; and
Fig. 5 illustrates a flow diagram of the present invention.

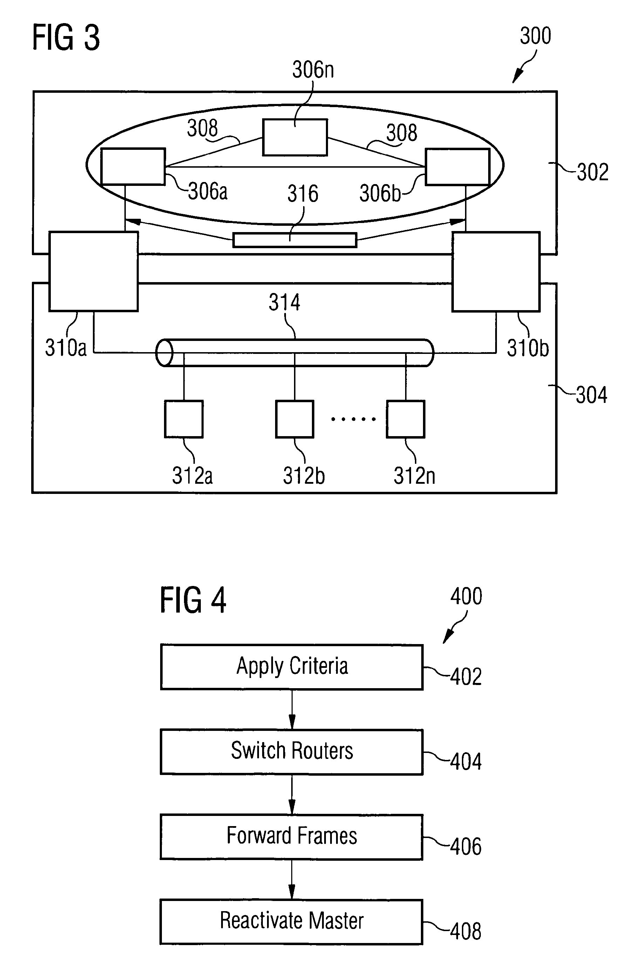

The present invention shall now be described with reference to the exemplary Network 300 shown in Figure 3 wherein similar elements are given similar reference numerals. As in the previous cases, a network 302 is coupled to a sub-network 304. Core Routers 306a-n route traffic 308 to Edge Routers 310a,b, which route the traffic 308 to Hosts 312a-n via an Ethernet 314.

Figure 3 shows the new policy function, ie, criteria, 316. Within the VRRP-process, the present invention triggers the switching from the VRRP-master 310a to the VRRP-Backup 310b. The criteria 316 in operation, for example, in the case of an interruption of the connection to the Core Router 306a, arranges for the control the switching of the VRRP-Master 310a to the Backup-Router 310b. The Ethernet Frames will from thereon be managed over the Backup-Router 310b. With the invention, the connection data is not lost.

Until now, the VRRP-Protocol has been applied only to the Edge Routers 310a,b for link interruptions in the Sub-Network 304 as criteria for switching to a second VRRP-Router 310b. Rather, the present invention initiates, ie, triggers, the switching of the VRRP router on the Sub-Network 304 side. The invention defines, for example, a number of criteria 316, which relate the connection between the Access Area and the IP-Backbone. In the invention, this means that a condition of the network 302 or network 302 parameter regarding a routing element on the sub-network side.

As shown by the flow diagram 400 of Figure 4, the new policy criteria, or functions, are applied in step 402 to trigger the redundancy protocol according to predetermined conditions. In step 404, the active process of the VRRP-Master is switched to the backup. The manner of switching is similar to the situation when an interface is interrupted to the Master router. Through this switching, the Ethernet frames are forwarded through the redundant router in step 406. In step 408, the VRRP-Master is reactivated when it is again capable of transmitting traffic.

It shall be appreciated that the manner of coding the routers is similar to the VRRP and anyone skilled in the art of programming redundancy protocols will know readily how to implement the criteria. While the invention relates to the VRRP Protocol, any suitable redundancy protocol is within the present invention. And, while the invention is explained with reference to an Ethernet Interface of an Access Area, the invention relates more broadly to triggering switching in any type of Sub-Network.

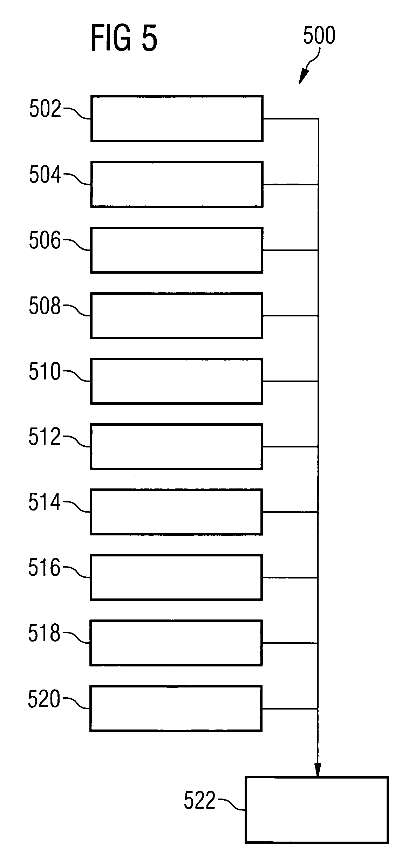

Now, the criteria of the present invention for triggering the switching of the routers will be described with reference to the flow diagram 500 of Figure 5. In general, the criteria in steps 502 to 520 are monitored and, in the event, any of the criteria are fulfilled, the invention switches the router connection in the Sub-Network to the back up router in step 522. The criteria are freely administerable to trigger the switching. That is, the invention is not limited to any particular criteria, but that any or a combination of the criteria may be employed. In addition, further criteria that relate the connection of the Access Area to the IP-Backbone not specified are within the invention.

A link interruption criteria, or policy, in step 502 takes into account link interruptions. According to this policy, the router-interfaces are assigned when a link interruption occurs. The present invention recognizes such an interruption in the link when a relevant router-interface is in a status 'down' condition, for example. This may occur because the corresponding cable is broken. In this case, the criteria triggers the VRRP process to switch the connection in the Sub-Network to the back up router.

In step 504, another criteria tracks the number of bit failures of the links to be watched. When the number of bit failures exceeds an assigned limit, then the present invention triggers the VRRP-Process to switch the connection to the back up router in the Sub-Network.

The traffic load on the links is monitored by the criteria of step 506. When the traffic load exceeds an assigned limit by determining, for example, when an assigned maximum bit rate of the interfaces is exceeded, then the present invention triggers the VRRP-Process to switch the connection to the back up router in the Sub-Network.

The present invention handles networks that utilize traffic classes (or categories) as well, such as in Multi-Protocol Label Switching (MPLS). Briefly, MPLS involves setting up a specific path for a given sequence of packets, identified by a label put in each packet. This saves the time needed for a router to look up the address, which indicates where to forward the data, ie, the next node. When the traffic load within one or more traffic classes of the links to be watched exceeds an assigned limit, as in step 508, the routers are caused to be switched as in the previous step of 506. In this case, however, only the relevant MPLS parameters, ie, the traffic class specific counter and assigned limits, are evaluated.

In step 510, a criteria for monitoring an interruption of routing-protocol neighbors is provided. In this case, when the routing neighbors are interrupted, a back up is assigned.

When it is known to the Core Router, for example, by way of the OSPF protocol, that the adjacency to an assigned neighbor is lost, the criteria triggers the assignment of another adjacent router. In one aspect, the invention monitors when the adjacent neighbor no longer signals the IP network, for example, using the regular protocol (eg, OSPF-Hellos). When this occurs, the invention triggers the neighboring router to be switched.

An availability/unavailability of assigned routing tables entries criteria triggers the switching of the routers according to step 512. When it is known to the core router that an entry in the routing table that is being monitored is no longer maintained in the routing table, then the invention causes the router in the Sub-Network to be switched. This may occur, for example, because a router in the direction of a known destination is lost because of a defect.

In step 514, the criteria indicates when the number of entries of a routing table exceed an assigned limit. When too many entries are registered in the routing table, then the present invention triggers the VRRP-Process to switch the connection to the back up router in the Sub-Network.

In the case that a CPU load exceeds an assigned value, the criteria of step 516 triggers the VRRP-Process to switch the connection to the back up router in the Sub-Network. When it is known, for example, to the Core Router that the CPU-burden exceeds an assigned value, the router in the Sub-Network is switched. The CPU load may be that which is assigned to specified modules of the router and / or the central processor.

In step 518, a criteria provides that, when a Simple Network Management Protocol (SNMP) load exceeds an assigned value, the routers are switched. SNMP is the protocol governing network management and the monitoring of network devices and their functions. It is not necessarily limited to TCP/IP networks. When it is known to the router that the number of the SNMP-access to the router exceeds an assigned value, then the present invention triggers the VRRP-Process to switch the connection to the back up router in the Sub-Network. SNMP is described formally in the Internet Engineering Task Force (IETF) Request for Comment (RFC) 1157.

In the case that too little essential system sources are available within the router, the criteria of step 520 triggers the VRRP-Process to switch the connection to the back up router in the Sub-Network. For example, there may be insufficient Random Access Memory (RAM), non-volatile memory, flash cards, etc. It may occur, for example, that the resource limit may be exceeded due to memory leaks. In this case, the invention causes the router in the Sub-Network to be switched.

In one aspect of the invention, there is provided a carrier grade redundant connection that effects a 'virtual trunking' of a media gateway, shown simply as the displayed Host 312a-n (Figure 3). The criteria may be implemented, for that matter, by a soft switch provided, in part, by the Edge Router. In this aspect, it may also be provided that the VRRP handles redundant routing of the Sub-Network. For example, IP-Addresses for routing data, such as in a Pro-Gateway system, are instantiated according to the known VRRP-Process. Of course, the protocol may be other than a VRRP and may generally include any redundancy protocol.

Further, the present invention has been described with reference to OSPF (Open Shortest Path First). In brief, OSPF is a router protocol usually used within larger autonomous system networks. Using OSPF, a host that obtains a change to a routing table or detects a change in the network immediately multicasts the information to all other hosts in the network so that all have the same routing table information. The host using OSPF sends only the part that has changed. OSPF multicasts the updated information only when a change has taken place. OSPF bases its path descriptions on "link states" that take into account additional network information. OSPF also lets the user assign cost metrics to a given host router so that some paths are given preference-and supports a variable network sub-net mask so that a network can be subdivided. More information regarding OSPF can be obtained from the well-known literature.

In the various aspects of the invention, the Core Router 306a-n (Figure 3) may be part of a global data network, for example, the Internet. In the case of Figure 3, for example, the Core Router 306a-n routes IP Download Traffic 308 from the Internet Network 302 to the Edge Routers 310a, b. The Edge Routers could form part of an IP-Backbone, which is a set of paths that local or regional networks connect to for long-distance interconnection. The connection points could be network nodes or telecommunication data switching exchanges (DSEs).

The present invention has been described with reference to the several drawings in which specific examples of the Criteria have been illustrated. It shall be appreciated that the present invention, and its several elements, are by no means limited to the particular description or examples herein, but may include other aspects that embody the spirit of the invention.

## Claims

1. A method (500) for routing telecommunications traffic between a network and a sub-network, in which routing devices of the sub-network route the traffic in the sub-network according to a redundancy protocol, the method comprising the steps of:
setting (502-520) criteria that relates a condition of the network to the redundancy protocol of the sub-network; and
triggering (522) switching between the routing devices of the sub-network on the basis of the criteria.

2. The method of claim 1, wherein the criteria (502) relates an interruption in a link of a router interface between the network and the sub-network to switching of the router devices according to the redundancy protocol.

3. The method of any of the preceding claims, wherein the criteria relates (504) a number of bit failures of a router interface between the network and the sub-network to switching of the router devices according to the redundancy protocol.

4. The method of any of the preceding claims, wherein the criteria relates (506) traffic load of a router interface between the network and the sub-network to switching of the router devices according to the redundancy protocol.

5. The method of any of the preceding claims, wherein the criteria relates (512) an availability of a router interface between the network and the sub-network according to a routing table coupled to the network to switching of the router devices according to the redundancy protocol.

6. The method of any of the preceding claims, wherein the criteria relates (514) a number of entries in a routing table coupled to the network to switching of the router devices according to the redundancy protocol.

7. The method of any of the-preceding-claims, wherein the criteria relates (516) a load of a processor involved in routing the telecommunications traffic to switching of the router devices according to the redundancy protocol.

8. The method of any of the preceding claims, wherein the criteria relates (520) a number of resources of the network available to switching of the router devices according to the redundancy protocol.

9. A system (300) for routing telecommunications traffic (308), comprising:
a network (302) for sending/receiving the telecommunications traffic (308) ;
a sub-network (304) for receiving/sending the telecommunications traffic (308) from/to the network (302);
routing devices (310a,b) for routing the telecommunications traffic (308) in the sub-network (304) according to a redundancy protocol; and
a criteria (316) that relates a condition of the network to the redundancy protocol, thereby causing the routing devices (310a,b) to route the telecommunications traffic (308) according to the condition in the network (302).

10. The system of claim 9, wherein the network (302) is an Internet Protocol network.

11. The system of any of claims 9 or 10, wherein the redundancy protocol is a virtual router redundancy protocol.
